# EUROPEAN PATENT APPLICATION

(11) **EP 3 158 970 A1**
(43) Date of publication of application: **26.04.2017**
(21) Application number: 14895184.1
(22) Date of filing: 18.12.2014
(51) Int. Cl.: A61C 13/267, A61C 13/007, A61C 13/087

(54) **PARTIAL DENTURE AND METHOD FOR MANUFACTURING SAME**

(30) Priority: 20.06.2014 KR 20140075862
(71) Applicant: Cho, Yong-Moon, Ulsan 680-843 (KR)
(72) Inventor: CHO, Yong-Moon, Ulsan 680-843 (KR); CHO, Young-Il, Ulsan 683-703 (KR)
(74) Representative: Peters, Sebastian Martinus
(86) International application number: PCT/KR2014/012519
(87) International publication number: WO 2015/194725

(57) **Abstract**

The present invention relates to a partial denture and a method of manufacturing the same. The partial denture according to the present invention includes a frame having a connection piece with an indeterminate shape which protrudes from one side thereof; a base formed on the frame, excluding the connection piece, and having at least one or more artificial teeth installed on an upper surface thereof; and a clasp formed at the connection piece, wherein the base and the clasp are made of different materials.

## Description

### TECHNICAL FIELD

The present invention relates to a partial denture and a method of manufacturing the same, and more particularly to a partial denture allowing easy relining or rebasing and improving aesthetic impression, and a method of manufacturing the same.

### BACKGROUND ART

In general, humans have 32 teeth including 16 upper teeth and 16 lower teeth. Deciduous teeth developed in infancy are replaced with permanent teeth in the stage of growth. Such replaced permanent teeth are used for life.

One or more of permanent teeth may be damaged due to various oral diseases (cavities, gum disease, etc.). Such oral diseases cause unnatural pronunciation or poor grinding function when eating food. When several teeth are lost, pronunciation becomes inaccurate and food eating becomes impossible. Accordingly, problems, such as decrease of aesthetic impression and interference with normal social life, occur.

As one method of reconstructing or treating lost teeth, there is a method of providing false teeth through a denture. Such a method is used to provide a normal masticatory function, aesthetic recovery, and recovery of normal pronunciation. Dentures for providing false teeth are classified into a general denture for surrounding weakened teeth due to excessive cavity, nerve treatment, etc. or restoring a part at which teeth are lost; an aesthetic denture for mainly improving discoloration or dysmorphism of teeth, a gap between teeth, etc. occurring in anterior teeth; and an implant denture for avoiding inconvenience due to removal of healthy teeth at both sides of a lost tooth or use of a false tooth to restore the lost tooth. In particular, the implant denture is applied by implanting an implant at a part at which a tooth is damaged, and anchoring an artificial tooth to the implanted implant.

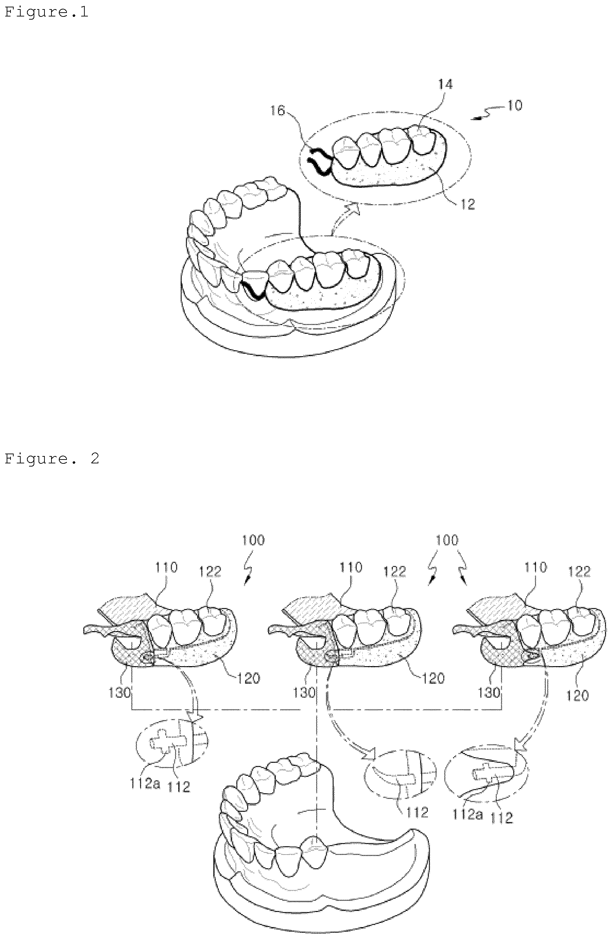

Meanwhile, in the case of a conventional denture using artificial teeth as a substitute for damaged teeth as illustrated in FIG. 1, a denture10 constituted of artificial teeth corresponding to the shapes of teeth, which are lost due to periodontal disease, etc. are manufactured; and a fixture 12 made of a soft substance harmless to the human body and coupled with gums to be operated while surrounding the same in a state in which artificial teeth 14 are fixed has been used.

Such a denture 10 substitutes for lost teeth by coupling with the gums, which are in need of a procedure, in a state in which the artificial teeth 14 are fixed to the fixture 12. Here, the fixture 12 is made of an acrylic resin or an elastic, flexible resin.

Such a denture, a fixture of which is made of an acrylic resin, has an advantage in that, when relining or rebasing is necessary due to recession of dentary bones of a user, the relining or rebasing can be easily performed, but has a problem that, in the case of a partial denture, a clasp 16, which is made of metal, for fixing the fixture 12 is exposed to the outside and thus aesthetic impression is decreased.

To address such an aesthetic impression decrease problem of a fixture composed of an acrylic resin, a denture, a fixture of which is made of an elastic, flexible resin, has recently been used. However, there is still a problem that, in the case in which relining or rebasing of a fixture is required due to recession of dentary bones of a user, there lining or rebasing is not easy.

### DISCLOSURE

### Technical Problem

Therefore, the present invention has been made in view of the above problems, and it is an object of the present invention to provide a partial denture providing improved aesthetic impression and facilitating maintenance or repair, such as relining or rebasing, and a method of manufacturing the same.

### Technical Solution

In accordance with an aspect of the present invention, the above and other objects can be accomplished by the provision of a partial denture including: a frame having a connection piece with an indeterminate shape which protrudes from one side thereof; a base formed on the frame, excluding the connection piece, and having at least one or more artificial teeth installed on an upper surface thereof; and a clasp formed at the connection piece, wherein the base and the clasp are made of different materials.

In accordance with another aspect of the present invention, there is provided a partial denture including: a frame; a base formed on the frame and having at least one or more artificial teeth installed on an upper surface thereof; and a clasp, one end of which is coupled with a joint formed at one side of the base, wherein the base and the clasp are made of different materials.

At least one or more protrusions may be formed at an outer surface of the connection piece.

The connection piece may be curved.

At least one or more stumbling blocks or stumbling grooves may be formed at an inside surface of the joint.

The base may be made of an acrylic resin facilitating relining or rebasing, and the clasp may be made of an elastic, flexible resin providing improved aesthetic impression.

In accordance with yet another aspect of the present invention, there is provided A method of manufacturing a partial denture, the method including: a method of manufacturing a frame having a connection piece with an indeterminate shape which protrudes from one side thereof; a step of molding a base, on an upper surface of which at least one or more artificial teeth are installed, on the frame, excluding the connection piece; a step of connecting a clasp to the connection piece by injection molding; a step of coating a primer over an interface between the base and the clasp; and a step of coating an adhesive over the interface between the base and the clasp.

### Advantageous Effects

As apparent from the foregoing, a partial denture of the present invention having the aforementioned constructions provides improved aesthetic impression and facilitates maintenance and repair such as relining or rebasing.

### DESCRIPTION OF DRAWINGS

FIG. 1 is a perspective view illustrating a conventional denture.
FIG. 2 is an exploded perspective view illustrating a partial denture according to an embodiment of the present invention.
FIG. 3 is an exploded perspective view illustrating a partial denture according to another embodiment of the present invention.
FIG. 4 is a flowchart illustrating a method of manufacturing a partial denture according to an embodiment of the present invention.
FIG. 5 is a flowchart illustrating a method of manufacturing a partial denture according to an embodiment of the present invention.

### DETAILED DESCRIPTION OF THE INVENTION

### Best Mode

Preferred embodiments of the present invention are now described more fully with reference to the accompanying drawings. In the drawings, the thicknesses of lies and the sizes of constituents may be exaggerated for clarity.

In addition, the terms used in the specification are defined in consideration of functions used in the present invention, and can be changed according to the intent or conventionally used methods of clients, operators, and users. Accordingly, definitions of the terms should be understood on the basis of the entire description of the present specification.

FIG. 2 is an exploded perspective view illustrating a partial denture according to an embodiment of the present invention.

Referring to FIG. 2, the partial denture 100 according to an embodiment of the present invention includes a frame 110, a base 120, and a clasp 130.

The frame 110 is formed in an oral shape and has a connection piece 112 with an indeterminate shape protruding from one side thereof.

Preferably, at least one or more protrusions 112a are formed at an outer side surface of the connection piece 112, or an end of one side of the connection piece 112 is formed to be upwardly or downwardly curved. Such constitutions prevents separation of the clasp 130 from the connection piece 112 when the clasp 130, which is described in detail below, is coupled with the connection piece 112 by injection molding.

The base 120 covers and thus is coupled to gums and, on an upper surface of the base 120, the at least one or more artificial teeth 122 are installed in a shape corresponding to lost teeth. Here, the base 120 is formed at the frame 110, excluding the connection piece 112.

The clasp 130 is connected to the connection piece 112 by injection molding such that, to increase coupling force of the base 120 coupled to gums, gums near the gums to which the base 120 is coupled are covered.

Here, the base 120 and the clasp 130 may be formed of different materials. That is, the base 120 is preferably made of an acrylic resin which facilitates relining or rebasing when the base 120 does not fit the gums due to dentary bone recession of a user, and the clasp 130 is preferably made of an elastic, flexible resin to address a problem of aesthetic impression decrease due to outside exposure of a conventional clasp made of a metal material.

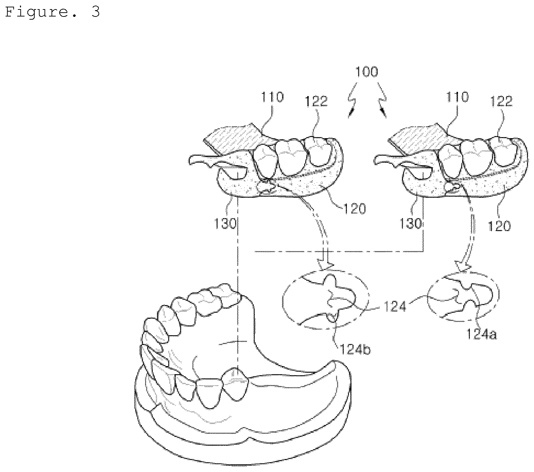

FIG. 3 is an exploded perspective view illustrating a partial denture according to another embodiment of the present invention.

As illustrated in FIG. 3, a partial denture 100 according to another embodiment of the present invention is similar to the partial denture 100 illustrated in FIG. 2. However, the partial denture 100 illustrated in FIG. 3 is different from the partial denture 100 of FIG. 2, in that a clasp 130 is molded such that, instead of the connection piece 112protruding from a side of the frame 110 as in FIG. 2, one end of the clasp 130 is coupled with a joint 124 formed at one side of a base 120.

Here, the at least one or more stumbling blocks 124a or stumbling grooves 124b are preferably formed at an inside surface of the joint 124. In particular, when the clasp 130 is connected to a side of the base 120 through the joint 124 by injection molding, the joint 124 prevents separation of the clasp 130 from the base 120 due to external force.

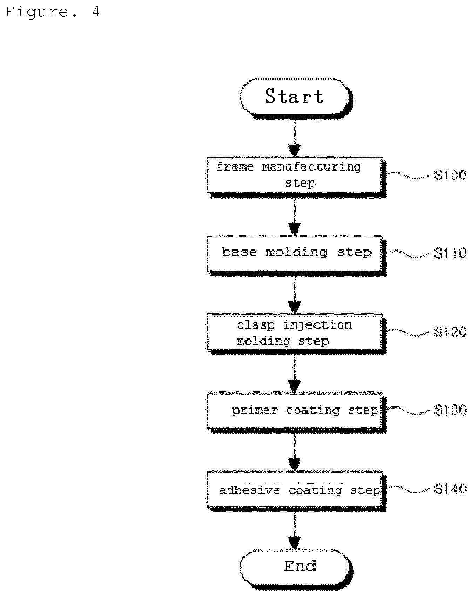

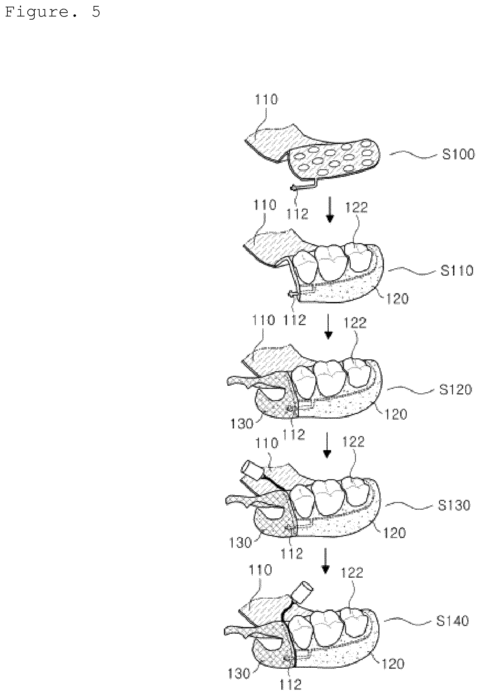

FIG. 4 is a flowchart illustrating a method of manufacturing the partial denture according to an embodiment of the present invention, and FIG. 5 is a flowchart illustrating a method of manufacturing the partial denture according to an embodiment of the present invention.

Referring to FIGS. 4 and 5, the method of manufacturing the partial denture according to an embodiment of the present invention includes a frame manufacturing step S100, a base molding step S110, a clasp injection molding step S120, a primer coating step S130, and an adhesive coating step S140.

In the frame manufacturing step S100, the frame 110, which is made of a metal material and has the connection piece 112a with an indeterminate shape having protrusions at one side thereof, is formed in an oral shape.

In the base molding step S110, the base 120 having the at least one or more artificial teeth 122 installed on an upper surface thereof is molded on the frame 110. Here, the base 120 is molded only on the frame 110, excluding the connection piece 112a.

Here, the base 120 is preferably made of an acrylic resin which facilitates relining or rebasing when the base 120 does not fit gums due to dentary bone recession of a user.

In the clasp injection molding step S120, the clasp 130 is connected to the connection piece 112a protruding from one side of the frame 110 by injection molding.

Here, the clasp 130 is preferably made of an elastic, flexible resin to increase coupling force of the base 120 to gums by surrounding gums near a gum part with which the base 120 is coupled, while addressing a problem of aesthetic impression decrease due to outside exposure of a conventional clasp made of a metal material.

In the primer coating step S130, a primer is coated over an interface between the base 120 and the clasp 130. That is, a surface property of the clasp 130 is changed such that the clasp 130 made of a flexible resin may be connected to the base 120 made of an acrylic resin.

In the adhesive coating step S140, an adhesive is coated over an interface between the base 120 and the clasp 130 to increase binding strength of the clasp 130 made of a flexible resin to the base 120 made of an acrylic resin.

Accordingly, in the partial denture according to an embodiment of the present invention, the base, which covers and thus is coupled to the gums, is made of an acrylic resin allowing easy relining or rebasing and the clasp is made of a flexible resin increasing fixing force of the base to the gums, thereby providing improved aesthetic impression.

While the preferred embodiments of the present invention has been described referring to the accompanying drawings, those skilled in the art will appreciate that many modifications and changes can be made to the present invention without departing from the spirit and essential characteristics of the present invention.

### Industrial Applicability

The present invention relates to a partial denture and a method of manufacturing the same. More particularly, a partial denture facilitating relining or rebasing and providing improved aesthetic impression, and a method of manufacturing the same are provided

### Description of Symbols

- 110: frame
- 112: connection piece
- 112a: protrusions
- 120: base
- 122: artificial teeth
- 124: joint
- 124a: stumbling blocks
- 124b: stumbling grooves
- 130: clasp

## Claims

1. A partial denture comprising:
a frame having a connection piece with an indeterminate shape which protrudes from one side thereof;
a base formed on the frame, excluding the connection piece, and having at least one or more artificial teeth installed on an upper surface thereof; and
a clasp formed at the connection piece,
wherein the base and the clasp are made of different materials.

2. A partial denture comprising:
a frame;
a base formed on the frame and having at least one or more artificial teeth installed on an upper surface thereof; and
a clasp, one end of which is coupled with a joint formed at one side of the base,
wherein the base and the clasp are made of different materials.

3. The partial denture according to claim 1, wherein at least one or more protrusions are formed at an outer surface of the connection piece.

4. The partial denture according to claim 1, wherein the connection piece is curved.

5. The partial denture according to claim 2, wherein at least one or more stumbling blocks or stumbling grooves are formed at an inside surface of the joint.

6. The partial denture according to claim 1 or 2, wherein the base is made of an acrylic resin facilitating relining or rebasing, and the clasp is made of an elastic, flexible resin providing improved aesthetic impression.

7. A method of manufacturing a partial denture, the method comprising:
manufacturing a frame having a connection piece with an indeterminate shape which protrudes from one side thereof;
molding a base, on an upper surface of which at least one or more artificial teeth are installed, on the frame, excluding the connection piece;
connecting a clasp to the connection piece by injection molding;
coating a primer over an interface between the base and the clasp; and
coating an adhesive over the interface between the base and the clasp.

8. The method according to claim 7, wherein the base is made of an acrylic resin facilitating relining or rebasing, and the clasp is made of an elastic, flexible resin providing improved aesthetic impression.
